# EUROPEAN PATENT SPECIFICATION

(11) **EP 3 027 090 B1**
(45) Date of publication and mention of the grant of the patent: **21.06.2017**
(21) Application number: 14777203.2
(22) Date of filing: 23.07.2014
(51) Int. Cl.: A47J 31/06, A47J 31/44

(54) **HOT BEVERAGE PREPARATION MACHINE**
HEISSGETRÄNKEZUBEREITUNGSMACHINE
MACHINE DE PRÉPARATION DE BOISSONS CHAUDES

(30) Priority: 02.08.2013 TR 201309441
(43) Date of publication of application: 08.06.2016
(73) Proprietor: Arçelik Anonim Sirketi, 34950 Istanbul (TR)
(72) Inventor: GERZELI, Ismail, 34950 Istanbul (TR); HASANREISOGLU, Ali Levent, 34950 Istanbul (TR); GUNDUZ, Nihat, 34950 Istanbul (TR); DAVASLIGIL, Sena, 34950 Istanbul (TR); ODACI, Sahin, 34950 Istanbul (TR); ALTUG, Mehmet, 34950 Istanbul (TR); COBAN, Burak Omer, 34950 Istanbul (TR); AKAN, Samet, 34950 Istanbul (TR); ALPTEKIN, Ahmet, 34950 Istanbul (TR); AYAROGLU, Emre, 34950 Istanbul (TR); CENGIZ, Osman, 34950 Istanbul (TR); DONMEZ, Ersin, 34950 Istanbul (TR)
(86) International application number: PCT/TR2014/000258
(87) International publication number: WO 2015/016794

(56) References cited:
- US-A- 5 363 745
- US-A- 5 957 036
- US-A1- 2009 223 888

## Description

The present invention relates to a hot beverage preparation machine comprising a strainer disposed inside the brewing chamber.

In hot beverage preparation machines, the water filled into the water container is heated by means of a water heater and is transferred to the brewing chamber containing raw material of the beverage to be prepared. The brewing process is performed in the brewing chamber as a result of the interaction between the beverage raw material and water. Afterwards, the brewed beverage is transferred into a pot and served. A handle is provided on the strainer so that the user can easily take out the strainer located in the brewing chamber. However, various design solutions are required for the strainer to be both convenient and low cost.

In the state of the art United States of America Patent Application documents No. US2009223888 and US-A1-8 957 036, a handle disposed on a filtering device is explained.

The aim of the present invention is the realization of a hot beverage preparation machine comprising a strainer that provides ease of production and utilization.

The hot beverage preparation machine realized in order to attain the aim of the present invention comprises the features of claim 1.

In an embodiment of the present invention, the stoppers at the end of the body are formed by bending the body.

In an embodiment of the present invention, the extension is manufactured by bending the strainer orifice towards the outside of the strainer. The hole remains under the extension. Similarly, the stoppers that are inserted through the hole are also situated under the extension and are long enough to lean against the extension when the handle is rotated.

In an embodiment of the present invention, the handle comprises the body having a first part and a second part in almost the same size and a connector that enables the first part and the second part to move together.

In an embodiment of the present invention, the handle comprises a nonlinear channel that is disposed in the connector and wherein the first part and the second part are placed, and the portions of the first part and the second part remaining inside the connector are configured to be almost similar to the channel structure.

In an embodiment of the present invention, the handle comprises a gap extending inwards from the end portion of the connector when the first part and the second part are placed into the connector.

In another embodiment of the present invention, the handle comprises a claw that is disposed on the connector and that extends into the channel and a cut-out that partially surrounds the claw and enabling the claw to stretch in two directions. The first part and the second part remain rigidly in the connector since the end portions of the first part and the second part apply force to the claw when placed into the channel.

In a derivative of this embodiment, the handle comprises the claw that forms one wall of the channel, having a surface that is not parallel to the opposite surface whereon the first or the second part is seated in the channel by sliding thereover and the first and the second parts having almost hook-shaped ends that prevent the first and the second parts from being dislodged from the channel by leaning against the claw when seated in the channel.

In another embodiment of the present invention, the handle comprises a flexible groove that is arranged on the connector, the distance between the walls thereof increasing as the first and/or the second part are placed into the handle and the distance between the walls thereof decreasing as the first and/or the second part are seated in the channel.

In an embodiment of the present invention, the handle comprises the body manufactured from metal wire and the connector manufactured from heat resistant plastic.

In an embodiment of the present invention, the connector is composed of two pieces and the said pieces are fixed to one another by snap-fitting.

In a derivative of this embodiment, the hot beverage preparation machine comprises a gear rack that is arranged on the channel, and at least one gear that is situated on the portion of the first part and the second part placed into the channel, that is inserted into the gear rack by being rotated and that enables first part and the second part to be fixed to the connector.

In an embodiment of the present invention, the hot beverage preparation machine comprises an opening that is arranged on the strainer, that is integrated with the hole, that enables the stopper to be inserted therethrough easily and seated into the hole, that is formed by bending the surface of the strainer and closed by bending again the said surface to its initial place.

By means of the present invention, a hot beverage preparation machine is realized that comprises a handle enabling the strainer to be easily taken out of the brewing chamber, with reduced production costs and providing ease of utilization.

By means of the present invention, a hot beverage preparation machine is realized that comprises the strainer having an easy-to-assemble, high strength handle providing ease of utilization for the user and with reduced production costs.

The hot beverage preparation machine realized in order to attain the aim of the present invention is illustrated in the attached figures, where:

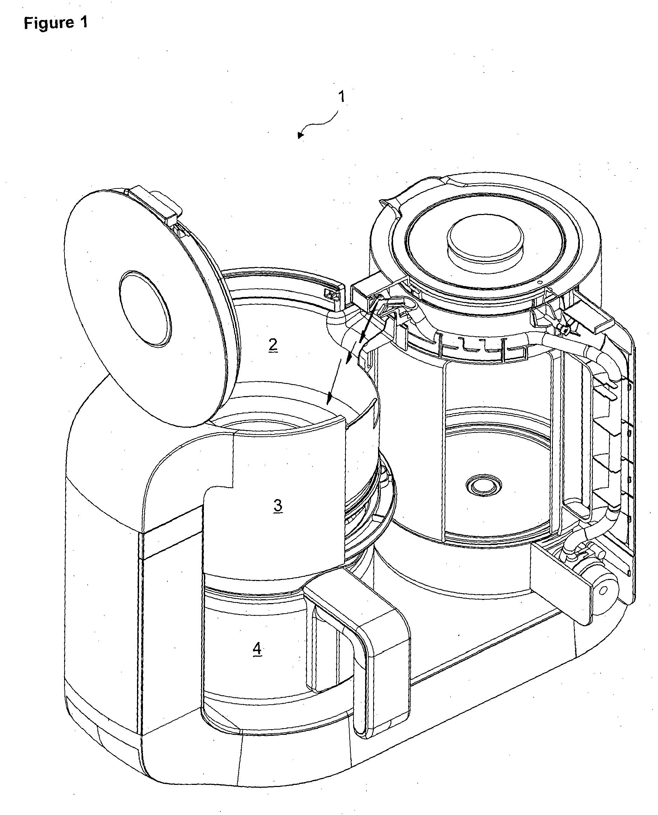

Figure 1 - is the perspective view of a hot beverage preparation machine.

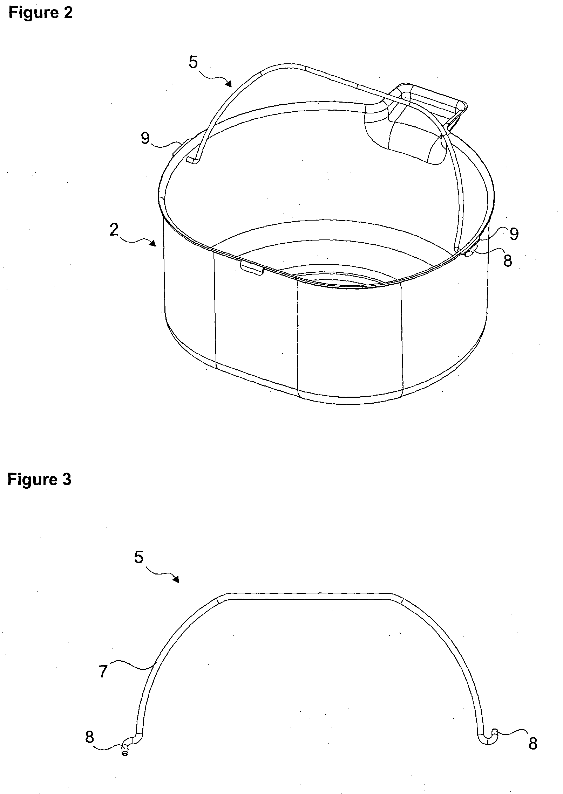

Figure 2 - is the perspective view of the strainer in an embodiment of the present invention.
Figure 3 - is the sideways view of the handle in an embodiment of the present invention.
Figure 4 - is the sideways view of the handle in another embodiment of the present invention.
Figure 5 - is the top view of the handle in another embodiment of the present invention.
Figure 6 - is the cross-sectional view of the handle in another embodiment of the present invention.
Figure 7 - is the exploded view of the handle and the perspective view of the strainer in another embodiment of the present invention.
Figure 8 - is the top view of the strainer when the handle is in the first position in an embodiment of the present invention.
Figure 9 - is the perspective view of the strainer when the handle is in the second position in an embodiment of the present invention.
Figure 10 - is the view of the connector in another embodiment of the present invention.
Figure 11 - is the sideways view of the handle in another embodiment of the present invention.

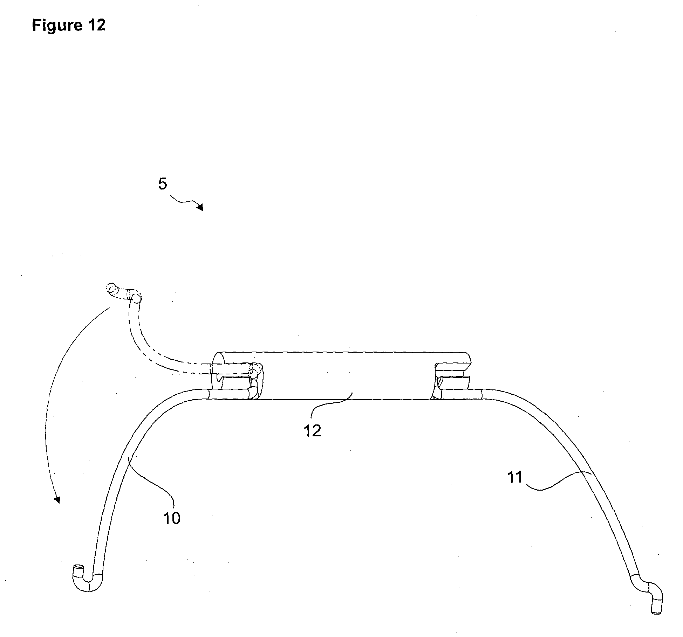

Figure 12 - is the perspective view of the handle in another embodiment of the present invention.

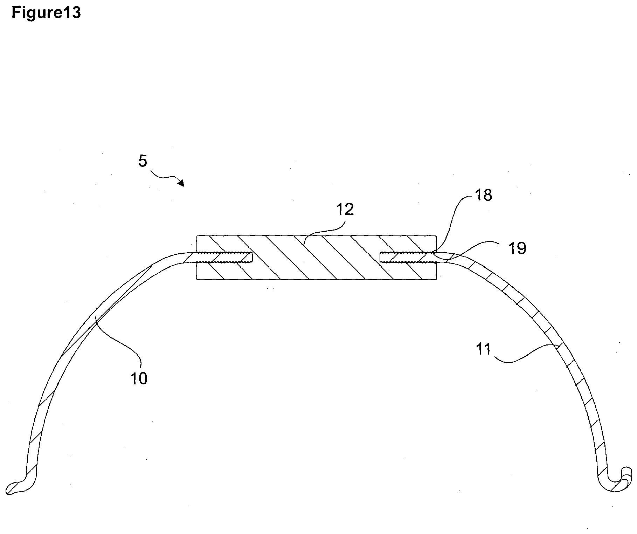

Figure 13 - is the cross-sectional view of the handle in another embodiment of the present invention.

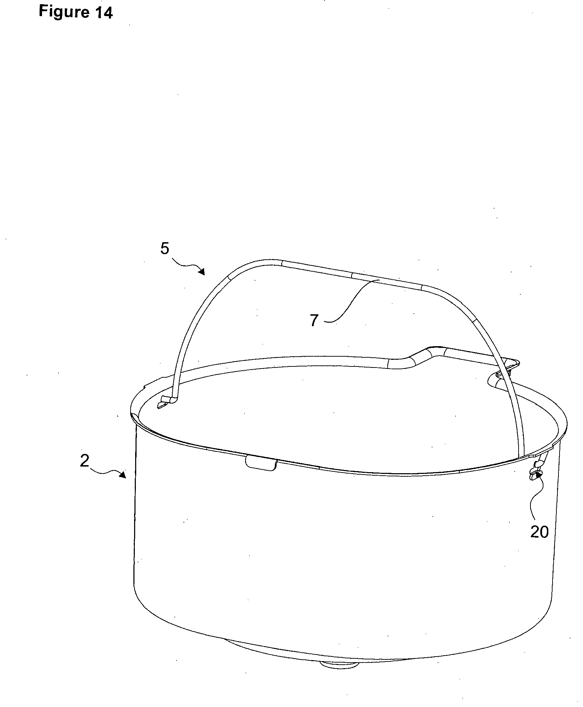

Figure 14 - is the perspective view of the strainer in another embodiment of the present invention.

The elements illustrated in the figures are numbered as follows:
1. Hot beverage preparation machine
2. Strainer
3. Brewing chamber
4. Pot
5. Handle
6. Hole
7. Body
8. Stopper
9. Extension
10. First part
11. Second part
12. Connector
13. Channel
14. Gap
15. Cut-out
16. Claw
17. Groove
18. Gear rack
19. Gear
20. Opening

The hot beverage preparation machine (1) comprises:
- a strainer (2) wherein the brewing process is performed as a result of the interaction between the water and the beverage raw material,
- a brewing chamber (3) wherein the strainer (2) is placed,
- a pot (4) whereto the beverage brewed in the brewing chamber (3) is transferred and
- a handle (5) disposed on the strainer (2) so as to rotate around the axis whereto it is connected,
- two holes (6) arranged oppositely on the strainer (2),
- the handle (5) having a body (7) with eccentric configuration.

The hot beverage preparation machine (1) of the present invention comprises:
- two stoppers (8) that are disposed at the end of the body (7) inserted through the hole (6), that remain on the wall of the hole (6) when inserted through the hole (6), that face different directions, each one being inserted through one hole (6),
- two extensions (9), each being situated in the vicinity of one hole (6), that, during the rotation of the handle (5), end the rotational movement of the handle (5) in the said direction by the stopper (8) contacting thereon and
- the handle (5) having a first position wherein it remains on the same plane as the orifice of the strainer (2) and a second position which is almost vertical to the first position, whereto it is changed by being rotated from the first position,
(Figure 1, Figure 2, Figure 3).

The user can conveniently take the strainer (2) in the brewing chamber (3) out of the brewing chamber (3) by grasping the handle (5) located on the strainer (2). While the handle (5) is in the first of these two positions on the strainer (2), being the first and the second position, vertical to one another, the user can conveniently add raw material, water etc. into the strainer (2), remaining in the vicinity of the strainer (2) orifice and in the same plane as the strainer (2) orifice without closing the strainer (2) orifice and in the second position whereto the handle (5) is changed from the first position by being rotating almost 90 degrees, the handle (5) remains almost in the center of the strainer (2) orifice in a position vertical to the strainer (2) orifice. The user can take the strainer (2) out of the brewing chamber (3) by conveniently grasping the handle (5).

While one of the two stoppers (8), each being inserted through one hole (6), leans against the extension (9) and enables the movement of the handle (5) to be ended in the direction of rotation when the handle (5) is changed to the first position by being rotated, the other stopper (8) does not contact the extension (9). When the handle (5) is changed to the second position by being rotated almost 90 degrees in the reverse direction, this time the said stopper (8) leaning against the extension (9) in the first position, does not contact the extension (9), and the other stopper (8) ends the rotation of the handle (5) by leaning against the extension (9) that remains above the extension (9) whereat it is placed.

In an embodiment of the present invention, the stoppers (8) are formed by bending the body (7) that is produced from wire. Thus, ease of production is provided.

In an embodiment of the present invention, the extension (9) is manufactured by bending the strainer (2) orifice outwards. The hole (6) remains almost under the extension (9). The stoppers (8) that are inserted through the holes (6) are under the extension (9) and long enough to contact the extension (9) when the handle (5) is rotated.

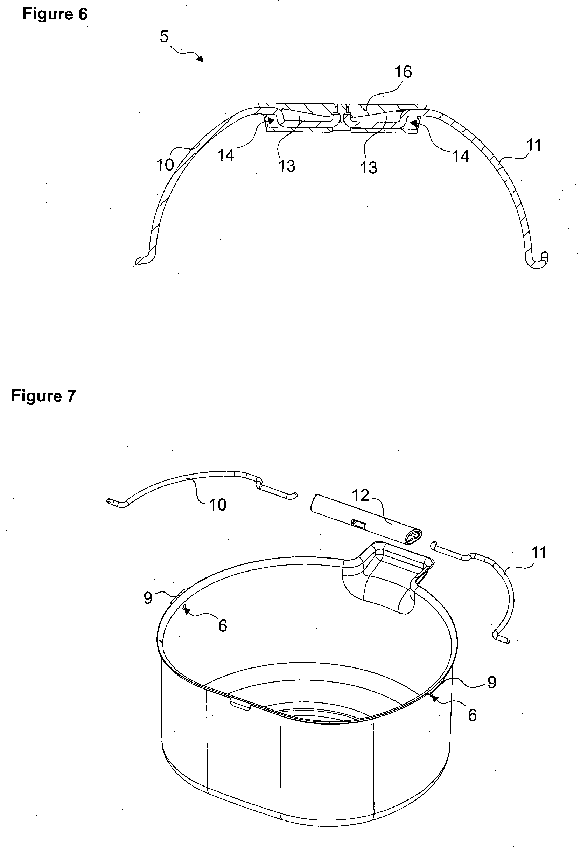

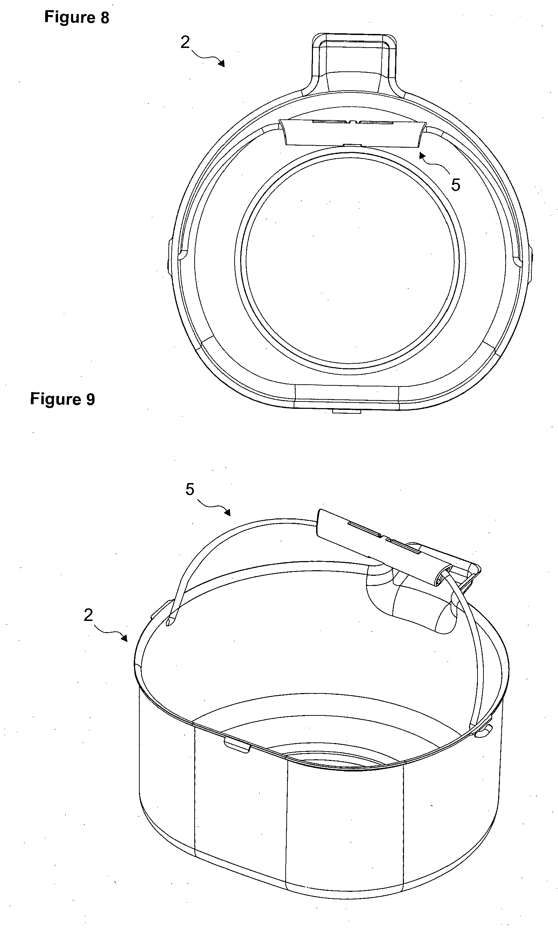

In an embodiment of the present invention, the body (7) comprises a first part (10) and a second part (11) in almost the same size and a connector (12) that connects the first part (10) and the second part (11) to each another. The first part (10) and the second part (11) have two ends. One of these is inserted through the hole (6) and the other is inserted into the connector (12). The connector (12) that is connected with the first part (10) and the second part (11) is situated almost at the middle of the handle (5) (Figure 7, Figure 8 and Figure 9).

In a derivative of this embodiment, the handle (5) comprises a nonlinear channel (13) that is arranged inside the connector (12) whereto one end of the first part (10) and the second part (11) are placed. The portions of the first part (10) and the second part (11) remaining inside the connector (12) are squeezed in the nonlinear channel (13) and do not dislodge from the connector (12) when pulled by the user.

In an embodiment of the present invention, the handle (5) comprises at least two gaps (14) that remain at the end of and partially inside the connector (12), when the first part (10) and the second part (11) are placed into the connector (12), that prevent formation of torsional and/or bending stress in the first part (10) and the second part (11) and that create partial movement areas for the first part (10) and the second part (11). When the first part (10) or the second part (11) is placed into the connector (12), the gaps (14) remain at the end portions of the connector (12). The said gap (14) provides freedom of movement for the connector (12) and the first part (10) or the second part (11). Formation of stress intensity in the vicinity of the said gap (14) as a result of the force applied on the handle (5) is prevented.

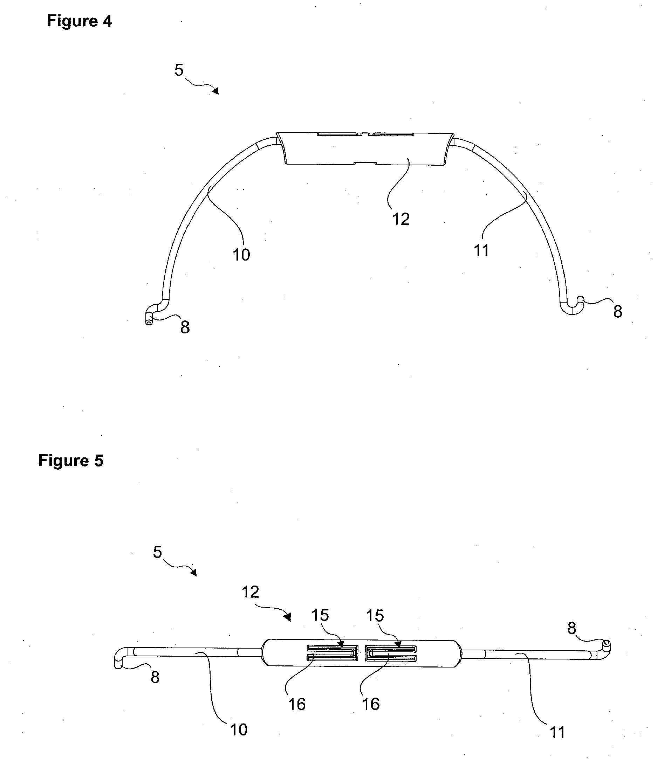

In another embodiment of the present invention, the handle (5) comprises a claw (16) that is disposed on the connector (12) and that extends into the channel (13), and a cut-out (15) that partially surrounds the claw (16) and enables the claw (16) to stretch in two directions. The first part (10) and the second part (11) remain rigidly in the connector (12) when placed into the channel (13) by the end portions of the first part (10) or the second part (11) applying force to the claw (16) (Figure 4, Figure 5, Figure 6).

In a derivative of this embodiment, the handle (5) comprises the claw (16) that forms a wall of the channel (13) and that has an inclined surface whereon the first part (10) or the second part (11) are seated in the channel (13) by sliding over, and the first part (10) and the second part (11) having L-shaped ends preventing the first part (10) and the second part (11) from dislodging from the channel (13) by leaning against the claw (16) when seated in the channel (13). Consequently, the first part (10) and the second part (11) hold onto the end portion of the channel (13) wherein they move like a hook.

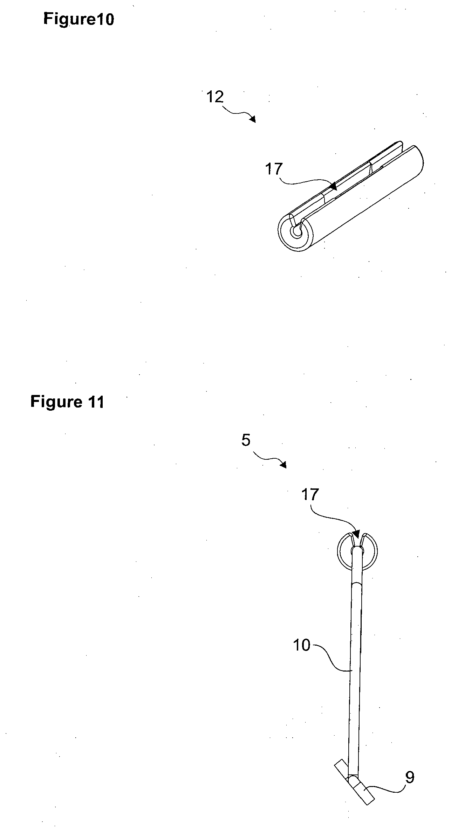

In another embodiment of the present invention, the handle (5) comprises a flexible groove (17) that is arranged on the connector (12) and that becomes wider while the first part (10) and/or the second part (11) is placed into the handle (5) (Figure 10, Figure 11).

In an embodiment of the present invention, the handle (5) comprises the body (7) manufactured from metal wire and the connector (12) manufactured from heat resistant plastic.

In an embodiment of the present invention, the connector (12) is composed of two pieces and the said pieces are fixed to one another by snap-fitting.

In an embodiment of the present invention, in the hot beverage preparation machine (1), some portions of the first part (10) and the second part (11) are placed into the connector (12) by being rotated.

In a derivative of this embodiment, the hot beverage preparation machine (1) comprises a gear rack (18) disposed on the channel (13), and at least one gear (19) that is situated on the portion of the first part (10) and the second part (11) placed into the channel (13), that is inserted into the gear rack (18) by being rotated and that enables the first part (10) and the second part (11) to be fixed to the connector (12).

In an embodiment of the present invention, the hot beverage preparation machine (1) comprises an opening (20) that is arranged on the strainer (2), that is integrated with the hole (6), that enables the stopper (8) to be inserted therethrough easily and seated in the hole (6), that is formed by bending the surface of the strainer (2) and closed by bending the said surface to its initial place again.

By means of the present invention, a hot beverage preparation machine (1) is realized that comprises a handle (5) with reduced production costs, that provides ease of assembly and utilization, that enables the strainer (2) to be taken out of the brewing chamber (3) easily and that has a first position wherein it remains on the same plane as the orifice of the strainer (2) and in the vicinity of the orifice of the strainer (2) and a second position whereto it is changed from the first position by being rotated almost 90 degrees.

## Claims

1. A hot beverage preparation machine (1) comprising
- a strainer (2) wherein the brewing process is performed as a result of the interaction between the water and the beverage raw material,
- a brewing chamber (3) wherein the strainer (2) is placed,
- a pot (4) wherein the beverage brewed in the brewing chamber (3) is transferred and
- a handle (5) disposed on the strainer (2) so as to rotate around the axis whereto it is connected,
- two holes (6) arranged oppositely on the strainer (2),
- the handle (5) having a body (7) with eccentric configuration, wherein the hot beverage preparation machine further comprises:
- two stoppers (8) that are disposed at the end of the body (7) inserted through the hole (6), that remain on the wall of the hole (6) when inserted through the hole (6), that face different directions, each one being inserted through one hole (6),
- two extensions (9), each being situated in the vicinity of one hole (6), that, during the rotation of the handle (5), end the rotational movement of the handle (5) in the said direction by the stopper (8) contacting thereon and wherein
- the handle (5) has a first position wherein it remains on the same plane as the orifice of the strainer (2) and a second position which is almost vertical to the first position, whereto it is changed by being rotated from the first position.

2. A hot beverage preparation machine (1) as in Claim 1, **characterized in that** the stoppers (8) that are manufactured by bending the body (7).

3. A hot beverage preparation machine (1) as in Claim 1 or 2, **characterized in that** the extension (9) that is manufactured by bending the strainer (2) orifice outwards.

4. A hot beverage preparation machine (1) as in any one of the above claims, **characterized in that** the body (7) having a first part (10) and a second part (11) in almost the same size and a connector (12) that connects the first part (10) and the second part (11) to each another.

5. A hot beverage preparation machine (1) as in Claim 4, **characterized in that** a nonlinear channel (13) that is arranged in the connector (12) wherein the first part (10) and the second part (11) are placed and the first part (10) and the second part (11) of which the portions remaining inside the connector (12) are at least partially nonlinear.

6. A hot beverage preparation machine (1) as in Claim 4 or 5, **characterized in that** at least two gaps (14) that remain at the end of and partially inside the connector (12), when the first part (10) and the second part (11) are placed into the connector (12), that prevent formation of torsional and/or bending stress in the first part (10) and the second part (11) and that create partial movement areas for the first part (10) and the second part (11).

7. A hot beverage preparation machine (1) as in any one of the Claims 5 to 6, **characterized in that** a claw (16) that is disposed on the connector (12) and that extends into the channel (13), and a cut-out (15) that partially surrounds the claw (16) and enables the claw (16) to stretch in two directions.

8. A hot beverage preparation machine (1) as in claim 7, **characterized in that** the claw (16) that forms a wall of the channel (13) and that has an inclined surface whereon the first part (10) or the second part (11) are seated in the channel (13) by sliding over, and the first part (10) and the second part (11) having L-shaped ends preventing the first part (10) and the second part (11) from dislodging from the channel (13) by leaning against the claw (16) when seated in the channel (13).

9. A hot beverage preparation machine (1) as in any one of the Claims 5 to 8, **characterized in that** the handle (5) comprising a flexible groove (17) that is arranged on the connector (12), the distance between the walls thereof increasing as the first part (10) and/or the second part (11) are placed into the handle (5) and the distance between the walls thereof decreasing as the first part (10) and/or the second part (11) are seated in the channel (13).

10. A hot beverage preparation machine (1) as in any one of the Claims 4 to 9, **characterized in that** the body (7) manufactured from metal wire and the connector (12) manufactured from heat resistant plastic.

11. A hot beverage preparation machine (1) as in any one of the Claims 4 to 10, **characterized in that** the connector (12) that is composed of two pieces, the said pieces being fixed to one another by snap-fitting.

12. A hot beverage preparation machine (1) as in any one of the Claims 4 to 11, **characterized in that** the first part (10) and the second part (11), of which some portions are placed into the connector (12) by being rotated.

13. A hot beverage preparation machine (1) as in Claim 12, **characterized in that** a gear rack (18) disposed on the channel (13), and at least one gear (19) that is situated on the portion of the first part (10) and the second part (11) placed into the channel (13), that is inserted into the gear rack (18) by being rotated and that enables the first part (10) and the second part (11) to be fixed to the connector (12).

14. A hot beverage preparation machine (1) as in any one of the above claims, **characterized in that** an opening (20) that is arranged on the strainer (2), that is integrated with the hole (6), that enables the stopper (8) to be inserted therethrough easily and seated in the hole (6), that is formed by bending the surface of the strainer (2) and closed by bending the said surface to its initial place again.

## Patentansprüche

1. Heißgetränkezubereitungsmaschine (1), umfassend
- einen Sieb (2), in dem infolge des Wechselwirkungs zwischen dem Wasser und dem Getränkerohstoff das Aufbrühen erfolgt
- einen Aufbrühkammer (3), in das der Sieb (2) platziert ist,
- eine Kanne (4), in die in dem Aufbrühkammer (3) gebrühte Getränke übertragen wird
- einen Griff (5), der auf dem Sieb (2) für die Drehung um seinen angekoppelten Achse angeordnet ist,
- zwei Bohrlöcher (6), die auf dem Sieb (2) entgegesetzt angeordnet sind,
- einen Griff (5), der ein Gehäuse (7) durch eine exzentrische Konfiguration besitzt. wobei hier die Heißgetränkezubereitungsmaschine weiters;
- zwei Stopfen (8), die durch die Bohrlöcher (6) an das Ende des Gehäuses (7) hineingesteckt sind, die auf der Wände der Bohrlöcher (6) stehenbleiben, als sie durch die Bohrlöcher (6) hineingesteckt sind, die in verschiedene Richtungen zugewandt sind und jede von denen in ein Bohrloch (6) hineingesteckt ist,
- zwei Erweiterungen (9), die jeweils in der Nähe eines Bohrlochs (6) platziert sind, und die während der Drehbewegung des Griffs (5) die entsprechende Rotationsbewegung des Griffs (5) mit dem hier in Anlage kommenden Stopfen (8) beendet, umfasst und
wobei sie hier;
- eine erste Position, bei der der Griff (5) und die Öffnung des Siebes (2) auf dem gleichen Niveau bleiben, und eine zweite Position, die aus der ersten Position gedreht geändert ist und fast vertikal zu der ersten Position steht.

2. Heißgetränkezubereitungsmaschine (1) nach Anspruch 1 **gekennzeichnet durch** die Stopfen (8), die durch Biegen des Gehäuses (7) gefertigt sind.

3. Heißgetränkezubereitungsmaschine (1) nach Anspruch 1 oder 2 **gekennzeichnet durch** eine Erweiterung (9), die durch Biegen der Öffnung des Siebes (2) gefertigt ist.

4. Heißgetränkezubereitungsmaschine (1) nach einem der vorhergehenden Ansprüche **gekennzeichnet durch** ein Gehäuse (7), das einen ersten Abschnitt (10) und einen zweiten Abschnitt (11) aufweist, die fast die gleiche Größe haben, und eine Bindung (12),die den ersten Abschnitt (10) und den zweiten Abschnitt (11) zueinander verbindet,

5. Heißgetränkezubereitungsmaschine (1) nach Anspruch 4 **gekennzeichnet durch** einen nichtlinearen Kanal (13), der in Bindung (12), wo der erste Abschnitt (10) und der zweite Abschnitt (11) vorhanden sind, angeordnet ist und dessen erster Abschnitt (10) und dessen Teile, die in Bindung (12) des zweite Abschnitts (11) vorliegen, teilweise nicht linear sind.

6. Heißgetränkezubereitungsmaschine (1) nach Anspruch 4 oder 5 **gekennzeichnet durch** mindestens zwei Hohlräume (14), die am Ende und teilweise im Inneren der Bindung (12) bleibt, wenn der erste Abschnitt (10) und der zweite Abschnitt (11) in die Bindung (12) eingesetzt sind, die die Ausbildung der Torsions- und / oder Biegebeanspruchung in dem ersten Abschnitt (10) und in dem zweiten Abschnitt (11) verhindert und die die Teilbereiche für die Bewegung des ersten Abschnitts (10) und des zweiten Abschnitts (11) erzeugen.

7. Heißgetränkezubereitungsmaschine (1) nach einem der Ansprüche 5 oder 6 **gekennzeichnet durch** eine Klemme (16), die auf die Bindung(12) aufgesetzt und in den Kanal (13) erstreckt ist und sowie eine Barriere (15), die die Klemme (16) teilweise umgibt und die die Dehnung der Klemme (16) ermöglicht.

8. Heißgetränkezubereitungsmaschine (1) nach Anspruch 7 **gekennzeichnet durch** Aufweisen einer Klemme (16), die eine schräge Fläche hat, die eine Wand des Kanals (13) ausbildet und die durch Gleiten auf den ersten Abschnitt (10) oder auf den zweiten Abschnitt (11) in den Kanal (13) hineingesetzt ist, und sowie L-förmige Enden, die das Driften des ersten Abschnitts (10) und des zweiten Abschnitts (11) aus dem Kanal (13) durch Anstoßen an die Klemme (16) verhindert, wenn der erste Abschnitt (10) und der zweite Abschnitt (11) in den Kanal (13) eingesetzt sind.

9. Heißgetränkezubereitungsmaschine (1) nach einem der vorhergehenden Ansprüche 5 bis 8 **gekennzeichnet durch** einen Griff (5), der eine flexible Rille (17) aufweist, die auf der Bindung (12) angeordnet ist und der Abstand zwischen deren Wänden erweitert, wenn der erste Abschnitt (10) und/oder der zweite Abschnitt (11) in den Griff (5) hineingesetzt wird und der Abstand zwischen deren Wänden verringert, wenn der erste Abschnitt (10) und/oder der zweite Abschnitt (11) in den Kanal (13) hineingesetzt wird.

10. Heißgetränkezubereitungsmaschine (1) nach einem der Ansprüche 4 oder 9 **gekennzeichnet durch** ein Gehäuse (7), das aus Metalldraht gefertigt ist und eine Bindung (12), die aus hitzebeständigem Kunststoff gefertigt ist

11. Heißgetränkezubereitungsmaschine (1) nach einem der Ansprüche 4 oder 10 **gekennzeichnet durch** eine Bindung (12), deren entsprechende Teile zueinander angreifend befestigt werden und die aus zwei Teilen bestanden ist.

12. Heißgetränkezubereitungsmaschine (1) nach einem der Ansprüche 4 oder 11 **gekennzeichnet durch** den ersten Abschnitt (10) und den zweiten Abschnitt (11), deren manche Teile in die Bindung (12) durch Drehen eingesetzt werden.

13. Heißgetränkezubereitungsmaschine (1) nach Anspruch 12 **gekennzeichnet durch** eine Zahnstange (18), die auf den Kanal (13) aufgesetzt ist und mindestens einen Zahnrad (19), der auf den Teilen des ersten Abschnitts (10) und des zweiten Abschnitts (11), die in den Kanal (13) eingesetzt sind, positioniert ist, der in die Zahnstange (18) drehend hineingesteckt wird und der die Befestigung des ersten Abschnitts (10) und des zweiten Abschnitts (11) an die Bindung (12) ermöglicht.

14. Heißgetränkezubereitungsmaschine (1) nach einem der vorhergehenden Ansprüche **gekennzeichnet durch** eine Öffnung (20), die auf dem Sieb (2) angeordnet ist, die mit dem Bohrloch (6) integriert, die das leichte Einstecken des Stopfens (8) dadurch ermöglicht und in das Bohrloch (6) eingesetzt wird, die die entsprechende Fläche, die durch das Biegen der Fläche des Siebes (2) ausgebildet ist, durch Biegen in die Position am Anfang schließt.

## Revendications

1. Une machine de préparation de boissons chaudes (1) comprenant
- un filtre (2) dans lequel le procédé de brassage est réalisé à la suite de l'interaction entre l'eau et la matière première de boisson,
- une chambre de brassage (3) dans laquelle le filtre (2) est placé,
- un pot (4) dans lequel la boisson brassée dans la chambre de brassage (3) est transférée et
- une poignée (5) disposée sur le filtre (2) de manière à tourner autour de l'axe où elle est reliée,
- deux trous (6) disposés à l'opposé sur le filtre (2),
- la poignée (5) ayant un corps (7) avec une configuration excentrique,
dans lequel la machine de préparation de boissons chaudes comprend en outre:
- deux bouchons (8) qui sont disposés à la fin du corps (7) insérés dans le trou (6) qui restent sur la paroi du trou (6) lorsqu'ils sont insérés à travers le trou (6), qui font face à des directions différentes, chacun étant inséré à travers un trou (6),
- deux extensions (9), chacune étant située au voisinage d'un trou (6), qui, lors de la rotation de la poignée (5), terminent le mouvement de rotation de la poignée (5) dans ladite direction par le bouchon (8) en contact avec lui et
dans laquelle
- la poignée (5) a une première position où elle reste sur le même plan que l'orifice du filtre (2) et une seconde position qui est presque verticale à la première position, laquelle est modifiée en étant tournée depuis la première position.

2. Une machine de préparation de boissons chaudes (1) selon la revendication 1, **caractérisée en ce que** les bouchons (8) qui sont fabriqués en pliant le corps (7).

3. Une machine de préparation de boissons chaudes (1) selon la revendication 1 ou 2, **caractérisée en ce que** l'extension (9) qui est fabriquée en pliant l'orifice de filtre (2) vers l'extérieur.

4. Une machine de préparation de boissons chaudes (1) selon l'une quelconque des revendications précédentes, **caractérisée en ce que** le corps (7) ayant une première partie (10) et une seconde partie (11) à peu près de la même taille et un connecteur (12) qui relie la première partie (10) et la deuxième partie (11) l'une à l'autre.

5. Une machine de préparation de boissons chaudes (1) selon la revendication 4, **caractérisée en ce qu'**un canal non linéaire (13) qui est disposé dans le connecteur (12) dans lequel la première partie (10) et la seconde partie (11) sont placées et la première partie (10) et la deuxième partie (11) dont les parties restant à l'intérieur du connecteur (12) sont au moins partiellement non linéaires.

6. Une machine de préparation de boissons chaudes (1) selon la revendication 4 ou 5, **caractérisée en ce qu'**au moins deux espaces (14) qui restent à la fin et partiellement à l'intérieur du connecteur (12) lorsque la première partie (10) et la seconde partie (11) sont placées dans le connecteur (12), qui empêchent la formation de contraintes de torsion et / ou de flexion dans la première partie (10) et la seconde partie (11) et qui créent des zones de mouvement partielles pour la première partie (10) et la deuxième partie (11).

7. Une machine de préparation de boissons chaudes (1) selon l'une quelconque des revendications 5 à 6, **caractérisée en ce qu'**une pince (16) qui est disposée sur le connecteur (12) et qui s'étend dans le canal (13) et une découpe (15) qui entoure partiellement la pince (16) et permet à la pince (16) de s'étendre dans deux directions.

8. Une machine de préparation de boissons chaudes (1) selon la revendication 7, **caractérisée en ce que** la pince (16) qui forme une paroi du canal (13) et qui présente une surface inclinée sur laquelle la première partie (10) ou la seconde partie (11) sont disposées dans le canal (13) en glissant, et la première partie (10) et la seconde partie (11) ayant des extrémités en forme de L empêchant la première partie (10) et la seconde partie (11) de se déplacer du canal (13) en s'appuyant sur la pince (16) lorsqu'elle est disposée dans le canal (13).

9. Une machine de préparation de boissons chaudes (1) selon l'une quelconque des revendications 5 à 8, **caractérisée en ce que** la poignée (5) comprend une rainure souple (17) qui est disposée sur le connecteur (12), la distance entre ses parois augmentant lorsque la première partie (10) et/ou la seconde partie (11) sont placées dans la poignée (5) et la distance entre les parois de celle-ci diminuant lorsque la première partie (10) et / ou la seconde partie (11) sont disposes dans le canal (13).

10. Une machine de préparation de boissons chaudes (1) selon l'une quelconque des revendications 4 à 9, **caractérisée en ce que** le corps (7) est fabriqué à partir de fil métallique et le connecteur (12) fabriqué en matière plastique résistant à la chaleur.

11. Une machine de préparation de boissons chaudes (1) selon l'une quelconque des revendications 4 à 10, **caractérisée en ce que** le connecteur (12) qui est composé de deux pièces, lesdites pièces étant fixées l'une à l'autre par encliquetage.

12. Une machine de préparation de boissons chaudes (1) selon l'une quelconque des revendications 4 à 11, **caractérisée par** la première partie (10) et la seconde partie (11), dont certaines parties sont placées dans le connecteur (12) en étant tourné.

13. Une machine de préparation de boissons chaudes (1) selon la revendication 12, **caractérisée en ce qu'**une crémaillère (18) disposée sur le canal (13) et au moins un engrenage (19) qui est situé sur la partie de la première partie (10) et la seconde partie (11) placée dans le canal (13) qui est insérée dans la crémaillère (18) par rotation et qui permet de fixer la première partie (10) et la seconde partie (11) au connecteur (12).

14. Une machine de préparation de boissons chaudes (1) selon l'une quelconque des revendications précédentes, **caractérisée en ce qu'**une ouverture (20) disposée sur le filtre (2), qui est intégrée au trou (6), qui permet au bouchon (8) d'être inséré facilement et disposé dans le trou (6), qui est formé en pliant la surface du filtre (2) et fermé en pliant de nouveau ladite surface à sa place initiale.
